# EUROPEAN PATENT APPLICATION

(11) **EP 2 253 388 A1**
(43) Date of publication of application: **24.11.2010**
(21) Application number: 09160753.1
(22) Date of filing: 20.05.2009
(51) Int. Cl.: B07B 1/22, C08B 30/04, B07B 1/46

(54) **Centrifugal sieve**

(71) Applicant: Gösta Larssons Mekaniska Verkstad AB, 295 21 Bromölla (SE)
(72) Inventor: Larsson, Jörgen, 290 34 Fjällkinge (SE); Röge, Wolfgang, 93104 Sünching (DE); Suthumno, Nopanat, 22140 Chataburi (TH)
(74) Representative: Hjalmarsson, Magnus Axel

(57) **Abstract**

A centrifugal sieve (1) for separating starch granules from a raw material, containing starch granules, liquid and fibres, which sieve comprises a rotatable drum (3) for centrifugation of said raw material, said rotatable drum (3) having a solid circumferential drum wall (4). The drum wall (4) is provided with sieving slots (15) for allowing the starch granules to pass through the drum wall (4) while retaining the fibres inside the drum wall (4).

## Description

### Technical field

The present invention relates to a centrifugal sieve for separating starch granules from a raw material, containing starch granules, liquid and fibres, which sieve comprises a rotatable drum for centrifugation of the raw material, said rotatable drum having a solid circumferential drum wall.

### Technical background

In the production of starch from different raw materials, such as roots like potatoes or manioc or from different grains like maize, wheat, rice or barley the starch granules in the cells of the raw material are to be extracted by disintegrating the raw material either by rasps or mills, sieving, washing and drying.

After disintegrating, the raw material has become a slurry containing fibres, starch granules and liquid. This slurry is conveyed to a centrifugal sieve, in which the starch granules and liquid are separated from the fibres.

The centrifugal sieves used up to now are essentially of the type shown in DE 963 590. In this type of sieve the starch slurry is fed to the top of a coarsely perforated, conical or cylindrical drum, the inside of which is covered with a screening plate insert. While the drum is rotating and the starch slurry is fed to the drum, water is sprayed on the inner drum wall via nozzles for washing out the starch. The starch granules are passing through the screening plate insert whereas the fibres are sliding down the screening plate insert to be collected and discharged at an outlet below the drum.
The screening plate inserts can be a metal foil, screen cloth or gauze. These inserts are very thin and delicate; they have a thickness of 0,1 - 0,3 mm with a hole size of 0,1 - 0,25 mm. As a screening insert wears down at operation it requires frequent repair or replacement, which is a time and labour demanding operation and includes removing of the conical drum from the centrifugal sieve, repairing or removing of the sieving insert, cleaning of the inner surface of the drum and applying of glue for fastening a new insert. One insert comprises one or several segments, which are fastened overlappingly one at a time. It is vital that the segments are sealingly attached to each other and to the drum. The exchanging operation greatly reduces the capacity of the centrifugal sieve. Further, this type of centrifugal sieves can only work at a limited rotational speed as the insert will losen or crack at higher velocities.

### Summary of Invention

It is an object of the present invention to overcome the above described drawbacks, and to provide an improved centrifugal sieve.

This and other objects that will be apparent from the following summary and description are achieved by a centrifugal sieve according to the appended claims.

According to an aspect of the present invention, there is provided a centrifugal sieve for separating starch granules from a raw material, containing starch granules, liquid and fibres, which sieve comprises a rotatable drum for centrifugation of the raw material, said rotatable drum having a solid circumferential drum wall. The drum wall is provided with sieving slots for allowing the starch granules to pass through the drum wall while retaining the fibres inside the drum wall.

In this way a sieving insert, as is used in known centrifugal sieves, is not needed. Thus a centrifugal sieve with improved capacity, higher reliability, less maintenance requirement and longer lifetime is achieved. Furthermore, the use of sieving slots instead of circular sieving holes contributes to improved capacity of the centrifugal sieve since a larger open area is achieved by slots.

Different raw materials are preferably separated at different rotational speeds.

The sieving slots are preferably arranged along helical lines about the center axis of the rotatable drum. By arranging the sieving slots along helical lines having a certain pitch, the sieving slot configuration can be adapted for a certain rotational speed of the drum and thus for a certain type of raw material, which further improves the capacity of the centrifugal sieve.

Preferably, the drum wall is divided in frusto-conical wall zones separated in the axial direction of the drum, the pitch of each of the helical lines in a first wall zone being larger than the pitch of each of the helical lines in a second wall segment located at a larger distance from the small end of the frusto-conical drum wall than said first wall zone. The rotatable drum may thus be adapted for a certain type and/or composition of raw material, e.g. by varying the number of drum wall zones and/or the pitch of the helical lines within a drum wall zone. By dividing the drum wall in zones this way the sieving slot configuration can be optimized with respect to how centrifugated material is transported inside the drum wall at different locations in the axial direction, which even further improves the capacity of the centrifugal sieve.

The sieving slots are preferably cut in the drum wall by means of electron beam cutting for exact and repeatable production.

Preferably, each of said sieving slots has a width of less than 0,25 mm. Preferably, each of said sieving slots has a length of less than 5,0 mm.

The cross-sectional area of each of said sieving slots is preferably increasing towards the outer surface of the drum wall, in order to prevent clogging of the sieving slots.

The drum wall preferably has a thickness of 1-3 mm.

Further advantages of the invention will be apparent from the following description and the appended claims.

### Detailed description of embodiments

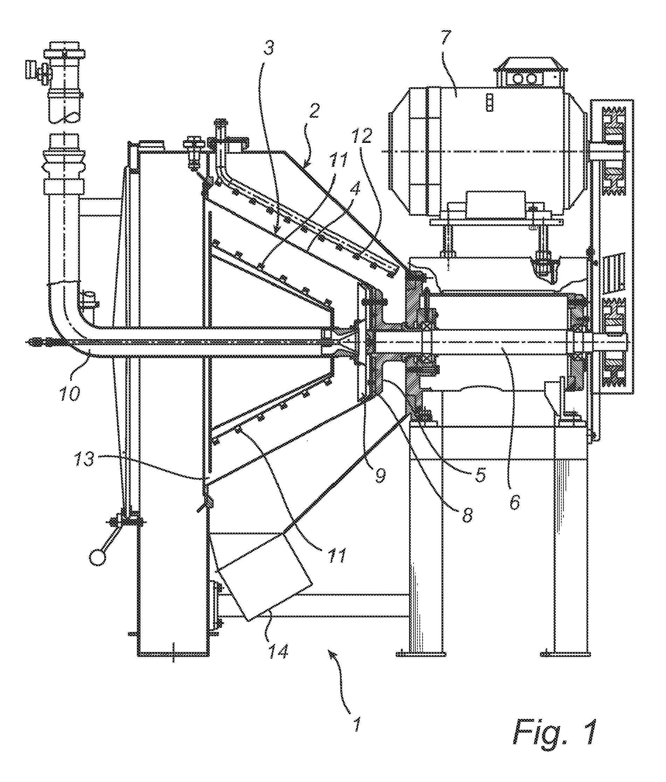

A centrifugal sieve 1 shown in Fig. 1 is used for separating starch granules from a starch-containing raw material in the form of a slurry. The centrifugal sieve 1 comprises a housing 2 with a separating drum 3, which is rotatable around its center axis. The drum 3 has a solid circumferential drum wall 4 provided with minute sieving slots extending all the way through the solid drum wall. The drum wall 4 is formed by a truncated cone, i.e the drum wall 4 is frusto-conical. An end plate 5 is covering the small diameter opening of the truncated cone.

For rotating the separating drum 3, a rotating shaft 6, driven by a motor 7, is attached to the end plate 5, concentric with the axis of rotation of the drum 3.

The truncated cone has a slurry inlet 8 at the end plate 5 at the smaller diameter opening of the truncated cone 4. A distribution plate 9 is arranged in parallel with and adjacent to the end plate 5 inside the truncated cone 4. A conduit 10 for feeding the slurry is passing through the large diameter opening of the truncated cone and ending at the inlet 8 between the end plate 5 and the distribution plate 9. In this way the fed slurry is distributed over the whole circular area at the top of the truncated cone.

Inside the drum wall 4 there is a set of nozzles 11 for spraying water at the inner drum wall surface, washing starch granules off the fibres and preventing material from clogging in the sieving slots. Outside the drum wall there is a further set of nozzles 12 for rinsing the outer drum wall surface.

The large diameter opening of the truncated cone forms an outlet 13 for a part of the slurry containing fibres. An outlet 14 for a part of the slurry containing starch granules, having passed the sieving slots, is provided in the housing 2.

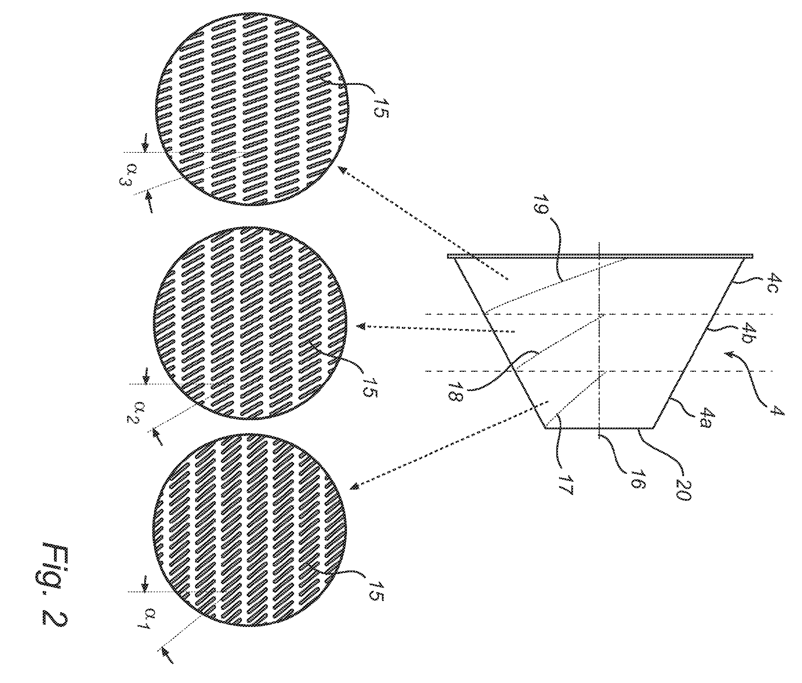

Fig. 2 shows the drum wall 4 in a side view. The drum wall 4 is provided with a large number of sieving slots 15, as illustrated by the enlarged parts of Fig. 2. The sieving slots 15 are through bores directly made in the solid drum wall 4. The sieving slots 15 have a width of 0,05 - 0,25 mm allowing the starch granules and liquid to pass through the drum wall while retaining the fibrers in the interiour of the drum wall. The sieving slots 15 have a length of 0,5 - 5mm.

The slots 15 are oriented along helical lines about the center axis 16 of the rotatable drum. In this embodiment the drum wall 4 is divided in three zones 4a, 4b and 4c, which are separated along the center axis 16 of the drum. The slots in 15 each of the zones are oriented along helical lines having a certain pitch, respectively. One such helical line in each of the drum wall zones 4a, 4b and 4c is illustrated by the dotted lines 17, 18 and 19, respectively.

The second drum wall zone 4b is located at a larger distance from the small end 20 of the truncated cone than the first drum wall zone 4a and the third drum wall zone 4c is located at a larger distance from the small end 20 of the truncated cone than the second drum wall zone 4b.

Within each of the drum wall zones the pitch of the helical lines is in this embodiment the same. Each of the slots in one and the same zone thus has a certain slot angle, which depends on the pitch of the helical lines in the said zone.

The pitch of each of the helical lines 18 in the second drum wall zone 4b is less than the pitch of each of the helical lines 17 in the first drum wall zone 4a and the pitch of each of the helical lines 19 in the third drum wall zone 4c is less than the pitch of each of the helical lines 18 in the second drum wall zone 4b. The relation between the slot angles α₁, α₂ and α₃, which are illustrated in the enlarged parts of Fig. 2, in each of the drum wall zones 4a, 4b and 4c, respectively, is thus: α₁> α₂> α₃. Preferably, α₁ is in the range from 60° to 35°, α₂ in the range from 35° to 25° and α₃ in the range from 25° to 10°. In this embodiment α₁ equals 40°, α₂ equals 30° and α₃ equals 20°.

The drum wall 4 has a thickness of ca 2-3 mm. A sieving insert, as used in known centrifugal sieves, is not required since the drum 3 acts as both a supporting cage and a sieving insert.

The drum wall 4 has an inner surface and an outer surface, wherein the inner surface and the outer surface have the same sieving slot configuration.

Each of the the sieving slots has increasing cross-sectional area towards the outer surface of the drum wall. This slot form will prevent material from blocking the slots.

Preferably, the slot angles vary in the range from 60° to 10° and more preferably in the range from 40° to 10°.

In an alternative embodiment the drum wall is divided in 9 wall zones, of which the zone being located at the small end of the truncated cone has a slot angle β₁=50° and the zone being located at the large end of the truncated zone has a slot angle β₉=10°.

It will be appreciated that the described embodiments of the invention can be modified and varied by a person skilled in the art without departing from the inventive concept defined in the appended claims.

It is for instance realized that in one embodiment all of the helical lines, along which the slots are oriented, may have the same pitch.

It is further realized that the drum wall can be divided in even more zones having helical lines with a certain pitch, in order to further improve the capacity of the a centrifugal sieve.

## Claims

1. Centrifugal sieve (1) for separating starch granules from a raw material, containing starch granules, liquid and fibres, which sieve comprises a rotatable drum (3) for centrifugation of the raw material, said rotatable drum (3) having a solid circumferential drum wall (4),
**characterized in that**
the drum wall (4) is provided with sieving slots (15) for allowing the starch granules to pass through the drum wall (4) while retaining the fibres inside the drum wall (4).

2. Centrifugal sieve (1) according to claim 1, wherein said sieving slots (15) being arranged along helical lines (17, 18, 19) about the center axis (16) of the rotatable drum (3).

3. Centrifugal sieve (1) according to claim 2, wherein the drum wall (4) is frusto-conical.

4. Centrifugal sieve (1) according to claim 3, wherein the drum wall (4) is divided in frusto-conical wall zones (4a, 4b, 4c) separated in the axial direction of the drum (3), the pitch of each of the helical lines (17) in a first wall zone (4a) being larger than the pitch of each of the helical lines (18) in a second wall zone (4b) located at a larger distance from the small end (20) of the frusto-conical drum wall (4) than said first wall zone (4a).

5. Centrifugal sieve (1) according to any one of the preceeding claims, wherein said sieving slots (15) are cut in the drum wall (4) by means of electron beam cutting.

6. Centrifugal sieve (1) according to any one of the preceeding claims, wherein each of said sieving slots (15) has a width of less than 0,25 mm.

7. Centrifugal sieve (1) according to any one of the preceeding claims, wherein each of said sieving slots (15) has a length of less than 5,0 mm.

8. Centrifugal sieve (1) according to any one of the preceeding claims, wherein the cross-sectional area of each of said sieving slots (15) is increasing towards the outer surface of the drum wall (4).

9. Centrifugal sieve (1) according to any one of the preceeding claims, wherein the drum wall (4) has a thickness of 1-3 mm.
